# EUROPEAN PATENT SPECIFICATION

(11) **EP 1 380 960 B1**
(45) Date of publication and mention of the grant of the patent: **24.02.2010**
(21) Application number: 02388045.3
(22) Date of filing: 12.07.2002
(51) Int. Cl.: G06F 13/16, G06F 13/42

(54) **Memory access from different clock domains**
Speicherzugriff aus verschiedenen Taktbereichen
Accès à mémoire des domaines d'horloge différents

(43) Date of publication of application: 14.01.2004
(73) Proprietor: TELEFONAKTIEBOLAGET LM ERICSSON (publ), 164 83 Stockholm (SE)
(72) Inventor: Ekvall, Andreas, 734 92 Hallstahammar (SE)
(74) Representative: Boesen, Johnny Peder

(56) References cited:
- GB-A- 2 053 537
- US-A- 5 671 393
- US-A- 5 761 533

## Description

### Technical Field of the Invention

The invention relates to a method of controlling access to a common memory module from a number of different processing units clocked by different clock signals, wherein the number of different processing units share common address lines and data lines connected to the memory module. The method comprises the steps of controlling the access to the common address and data lines by control signals generated by a memory control circuit so that only one of said processing units is allowed to drive said common address and data lines at a given time, and generating said control signals in dependence of the first clock signal when a processing unit clocked by the first clock signal is allowed to drive said common address and data lines, and in dependence of the second clock signal when a processing unit clocked by the second clock signal is allowed to drive said common address and data lines. The invention further relates to a memory control circuit for controlling access to a common memory module from a number of different processing units clocked by different clock signals.

### Description of Related Art

Memory control circuits of the above-mentioned type are used to avoid conflicts in digital circuits where more than one processing unit shall be allowed to read and/or write data to and/or from the same memory segment. A processing unit can be any digital circuit capable of exchanging data with a memory. As examples, central processing units, controllers and input/output devices may be mentioned. Control circuits of the type mentioned here are often referenced to as memory arbiters or memory arbitration circuits, and as an example they are often used in digital ASIC (Application Specific Integrated Circuit) designs.

In circuits having a memory and a single processing unit, access to the memory is normally obtained by means of a number of address lines and data data lines connecting the processing unit to the memory with a number of control lines, which may comprise e.g. clock signals, select signals and a signal indicating whether the processing unit is reading or writing data from/to the memory. When, for instance, the processing unit is going to write data into the memory, it drives the address lines with the relevant memory location, the data lines with the data to be written, and the control lines appropriately. When reading the processing unit drives the address lines, and the memory responds by driving either the same data lines or a separate set of reading data lines with the read data.

When several processing units running in parallel shall be allowed to access the same memory, this process is slightly more complicated, because the processing units will share the same address, data and control lines. This will create a conflict if two units attempt to drive the lines simultaneously. If, for instance, one unit is writing to the address lines in a given clock cycle, other units cannot be accessing the memory during this clock cycle. Moreover, the other units must tri-state their access to the lines in order not to interfere with the signals from the first unit. Thus, in this situation an arbitration scheme is needed to avoid the described conflict. Several arbitration schemes, such as random, First In-First Out, round-robin and priority based, are well-known, and they can all be used with the present invention. Access to the memory is then controlled by a memory arbiter circuit. Processing units needing access to the memory send a request signal to the arbiter, and based on the arbitration scheme used the arbiter grants access to the lines for a clock cycle to one of the processing units which is then allowed to drive the address, data and control lines during this clock cycle.

These memory arbiter circuits work well as long as only one clock domain is involved, i.e. all processing units as well as the memory and the memory arbiter circuit are controlled by the same clock signal. However, this is not always the case. In some circuits processing units from different clock domains are required to access the same memory. This could be a dual processor system in which two processors are running on more or less the same clock rate, but without being synchronized to each other. However, it could also be two or more processing units running on clock rates which are very different from each other. Especially in the latter case severe synchronization problems arise.

US 5 179 667 discloses a memory control apparatus using two different clock rates and intended to solve these synchronization problems. A CPU is running at a fast speed (i.e. at a high clock rate), while an input/output device is running at a slow speed (i.e. at a low clock rate). When the CPU is accessing memory, the CPU's clock rate governs, and when an input/output device is accessing memory the input/output device's clock rate governs. Although this apparatus is able to control the access to the memory from the two clock domains, the memory access will be delayed because wait states will have to be inserted each time the control apparatus switches between requests from the different clock domains.

GB-A-2053537 also discloses two processors, operating at different rates, accessing a common memory.

Therefore, it is an object of the invention to provide a method of controlling access to a common memory from processing units clocked by different clock signals which provides a faster memory access even when the control is switched between requests from the different clock domains.

### Summary

According to the invention the object is achieved in that the method further comprises the steps of sampling the second clock signal by the first clock signal, generating from results obtained by the sampling a sampled version of the second clock signal having edges defined by edges of the first clock signal, and synchronizing said control signals with the sampled version of the second clock signal when a processing unit clocked by the second clock signal is allowed to drive said common address and data lines.

By creating a sampled version of the second clock signal having its edges aligned with the edges of the first clock signal and using this version to control the control signals when a processing unit clocked by the second clock signal is accessing memory, wait states are avoided when the control is switched between requests from the different clock domains, and thus a faster memory access is achieved.

When the method further comprises the step of providing separate data lines for data to be written to the memory module by a processing unit and for data to be read from the memory module by a processing unit, the speed of the memory access can be improved further, because the address lines and the data lines for data to be read from the memory module can be driven by a processing unit in every clock cycle. Otherwise a further clock cycle would have been occupied for each read request, because the requesting unit and the memory cannot drive the same data lines in the same clock cycle. This is particularly relevant when clocked memory modules are used.

When the method further comprises the step of storing in a register data to be read by a processing unit clocked by the second clock signal for at least one clock period of the sampled version of the second clock signal, the data lines for read data will only be occupied for one clock cycle of the first clock signal, even when a processing unit clocked by the second (slower) clock signal reads data from the memory.

When the method further comprises the step of generating said control signals allowing a processing unit to drive said common address and data lines such that control signals generated in dependence of the first clock signal as well as control signals generated in dependence of the second clock signal are active for a time period equal to one clock cycle of the first clock signal, the address lines may be driven by a processing unit clocked by the first clock signal again even before a memory access governed by the second clock signal is completed.

When the method further comprises the step of generating said control signals allowing a processing unit to drive said common address and data lines combinatorially from one of said clock signals and a request signal from said processing unit, a request may be granted immediately in the clock cycle in which it occurs, thus improving the memory access further.

When the method further comprises the step of generating said control signals allowing a processing unit to drive said common address and data lines in a number of different state machines comprising at least one state machine for each of said different clock rates, each state machine depends on only one clock signal, which simplifies the design.

As mentioned, the invention also relates to a memory control circuit for controlling access to a common memory module from a number of different processing units arranged to be clocked by at least two different clock signals, a first one of said different clock signals having a first clock rate and a second clock signal having a second clock rate which is lower than the rate of the first clock signal, where the number of different processing units share common address lines and data lines connected to the memory module, the memory control circuit further being arranged to control the access to the common address and data lines by control signals generated by the memory control circuit so that only one of said processing units is allowed to drive said common address and data lines at a given time, and generate said control signals in dependence of the first clock signal when a processing unit clocked by the first clock signal is allowed to drive said common address and data lines, and in dependence of the second clock signal when a processing unit clocked by the second clock signal is allowed to drive said common address and data lines.

When the memory control circuit is further arranged to sample the second clock signal by the first clock signal; generate from results obtained by the sampling a sampled version of the second clock signal having edges defined by edges of the first clock signal; and synchronize said control signals with the sampled version of the second clock signal when a processing unit clocked by the second clock signal is allowed to drive said common address and data lines, a faster memory access is provided even when the control is switched between requests from the different clock domains.

When the memory control circuit is further arranged to control access to a common memory module having separate data lines for data to be written to the memory module by a processing unit and for data to be read from the memory module by a processing unit, the speed of the memory access can be improved further, because the address lines and the data lines for data to be read from the memory module can be driven by a processing unit in every clock cycle. Otherwise a further clock cycle would have been occupied for each read request, because the requesting unit and the memory cannot drive the same data lines in the same clock cycle. This is particularly relevant when clocked memory modules are used.

When the memory control circuit further comprises a register for storing data to be read by a processing unit clocked by the second clock signal for at least one clock period of the sampled version of the second clock signal, the data lines for read data will only be occupied for one clock cycle of the first clock signal, even when a processing unit clocked by the second (slower) clock signal reads data from the memory.

When the memory control circuit is further arranged to generate said control signals allowing a processing unit to drive said common address and data lines such that control signals generated in dependence of the first clock signal as well as control signals generated in dependence of the second clock signal are active for a time period equal to one clock cycle of the first clock signal, the address lines may be driven by a processing unit clocked by the first clock signal again even before a memory access governed by the second clock signal is completed.

When the memory control circuit is further arranged to generate said control signals allowing a processing unit to drive said common address and data lines combinatorially from one of said clock signals and a request signal from said processing unit, a request may be granted immediately in the clock cycle in which it occurs, thus improving the memory access further

When the memory control circuit comprises at least one state machine for each of said different clock rates, each state machine depends on only one clock signal, which simplifies the design.

### Brief Description of the Drawings

The invention will now be described more fully below with reference to the drawings, in which
figure 1 shows a block diagram of a known memory control system,
figure 2 shows an example of a timing diagram for the system of figure 1,
figure 3 shows a block diagram of a memory control system handling requests from two different clock domains,
figure 4 shows an example of a timing diagram for the system of figure 3,
figure 5 shows a block diagram of a memory control circuit according to the invention,
figure 6 shows an example of a timing diagram for a system with the memory control circuit of figure 5,
figure 7 shows a block diagram of a memory control system in which data outputs to the slower clock domain are registered,
figure 8 shows an example of a timing diagram for the system of figure 7,
figure 9 shows an example of a timing diagram for a memory control system in which all bus grant signals are clocked on the faster clock signal,
figure 10 shows a state diagram for a state machine handling the faster clock domain in a system corresponding to the timing diagram of figure 9,
figure 11 shows a state diagram for a state machine handling the slower clock domain in a system corresponding to the timing diagram of figure 9, and
figure 12 shows a state diagram for an acknowledge signal to the slower clock domain in a system corresponding to the timing diagram of figure 9.

### Detailed Description of Embodiments

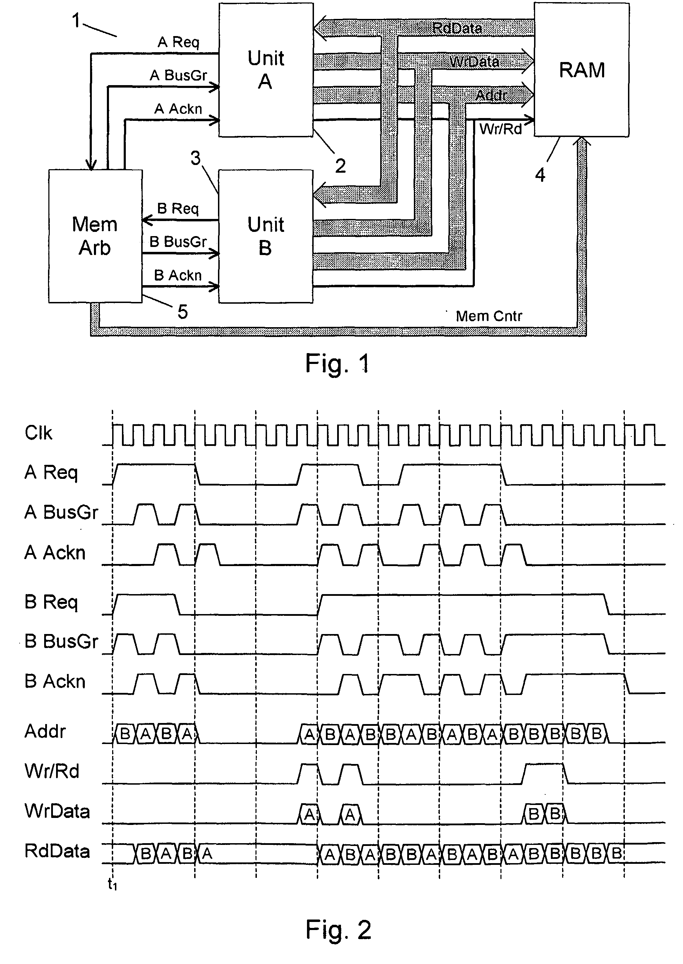

Figure 1 shows a known memory control system 1 in which two processing units 2, 3 (Unit A and Unit B) can both access a memory 4, which is here a RAM (Random Access Memory) of the clocked type, which means that read data will be available the clock cycle after an address is clocked in. A common address bus with a number of address lines allows the processing units 2, 3 to supply addresses to the memory 4, while two separate data buses are used for reading and writing data, respectively. The separate buses for reading and writing data are normally used with clocked RAMs, as in this example, while a common data bus for reading and writing data is often sufficient for other types of memory. A Wr/Rd signal indicates to the memory whether a processing unit is reading or writing data. Although only two processing units are shown, it should be noted that the system could very well include further units, which could all be connected to the memory 4 in the same way.

The access to the memory is controlled by a memory control circuit 5, which in the following is also called a memory arbiter and works according to an arbitration scheme, such as random, First In-First Out, round-robin or priority based arbitration. Although not shown, a single clock signal is used by both processing units 2, 3 as well as the memory 4 and the memory arbiter 5.

The processing units 2, 3 request access to the memory by means of request signals (A Req and B Req) sent to the memory arbiter, which in turn can allow one of the processing units to drive the address and data buses for one clock cycle by means of control signals in the form of bus grant and acknowledge signals (A BusGr, B BusGr, A Ackn and B Ackn). A bus grant signal to one of the units means that this unit may drive the common buses/lines for address, data and the Wr/Rd signal, while an acknowledge signal tells the requesting unit that read data are available on the read data bus. A number of control lines may also be connected from the memory arbiter 5 to the memory 4. These lines may include the clock signal, select signals, output enable signals or similar control signals depending on the type of memory used, and for some types of memory they may be avoided.

Figure 2 shows a timing diagram illustrating an example of how the memory arbiter controls the access to the memory from the two processing units. The clock signal Clk is shown at the top of the diagram, while the other signals correspond to the signals shown in figure 1. It is noted that all signal shifts are initiated by a positive going edge of the clock signal Clk, because all circuits are clocked by this clock signal. The selected arbitration scheme ensures that the granted unit should change every clock cycle, when more than one unit is requesting access simultaneously. If two new requests arrive at the same time, it is decided according to the arbitration scheme which unit should be granted the first clock cycle. In this case it is assumed that Unit B is given a higher priority than Unit A.

At the time t₁ requests to read data from the memory are received from Unit A as well as Unit B. Since Unit B has the higher priority it is granted the first clock cycle by activating the signal B BusGr. This signal is generated combinatorially so that it is available directly in the same clock period. As a response to this signal, Unit B drives the address bus with the address of the relevant memory location, and also this happens combinatorially in the same clock period. In the next clock period Unit A is allowed to drive the address bus, and at the same time the data requested by Unit B are now available on the RdData bus, which is acknowledged to Unit B by activating the signal B Ackn. Since both units are requesting a further access, Unit B is again granted the next clock period followed by Unit A. To the right in the figure another example is shown in which also write requests are shown. In this example the RdData bus and one of the acknowledge signals are activated in the clock period after a granted activation of the address bus, even in the case of a write operation. This allows the units to check that the data were actually written into the memory. However, these signals could also remain non-activated following a write operation.

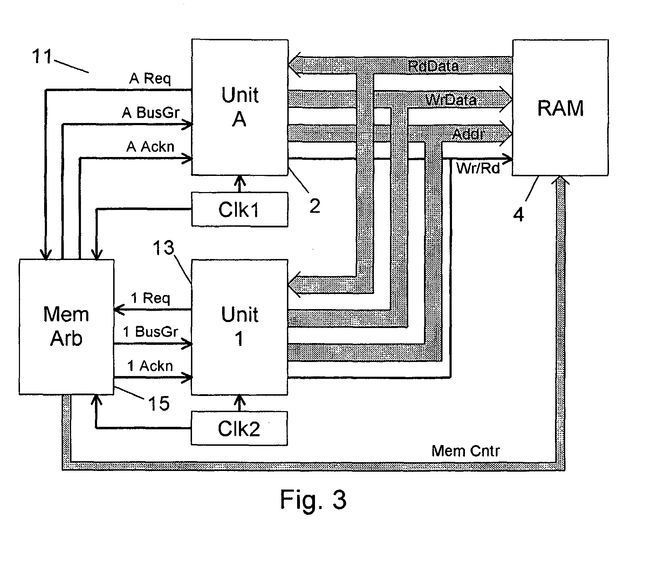

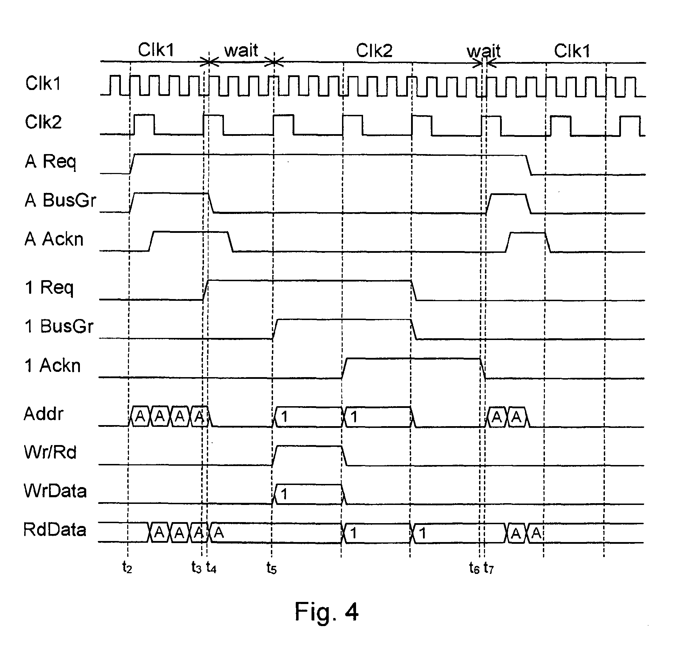

As mentioned, in figures 1 and 2 both processing units belonged to a single clock domain, i.e. they were clocked by the same clock signal that was also used for the memory arbiter and the memory. Figures 3 and 4 illustrate some of the problems that arise when processing units belonging to different clock domains request access to a common memory. In the memory control system 11 in figure 3, the processing unit 2 (Unit A) is a processing unit similar to Unit A in figure 1, and it belongs to a clock domain clocked by the clock signal Clk1 corresponding to the signal Clk shown in figure 2. Although not shown, it is assumed that further processing units, e.g. Unit B, Unit C and Unit D, may belong to the same clock domain. The processing unit 13 (Unit 1) belongs to a different clock domain clocked by the clock signal Clk2. Although not shown, it is assumed that further processing units, e.g. Unit 2 and Unit 3, may belong to the same clock domain. As seen in figure 4, Clk2 has a lower clock rate than Clk1. As examples, Unit A, Unit B, etc. may be CPUs, e.g. running on a clock frequency in the range 10-40 MHz, while Unit 1, Unit 2, etc., may be input/output devices such as Ethernet interfaces, disk controllers and printer interfaces, which are normally running on considerably lower clock frequencies. Further, each of the two clock signals will often be free running, i.e. they are not synchronized to each other.

The memory arbiter 15 is necessarily more complex than the memory arbiter 5 of figure 1, because it must be able to handle both clock domains. It should be governed by Clk1 when Unit A is accessing memory, and by Clk2 when Unit 1 is accessing memory, and both clock signals are therefore connected to the memory arbiter 15 and through the memory control bus also to the memory 4.

This is illustrated in figure 4. At time t₂ Unit A requests a number of read operations, and since no other units are accessing the memory at this time, access is granted immediately for a number of consecutive clock cycles. However, at time t₃, which is in the middle of a Clk1 clock cycle, Unit 1 requests a write operation to the memory. Although it is assumed in this example that the units belonging to the Clk2 clock domain always have a higher priority than the units belonging to the Clk1 clock domain, the read operation already in progress by Unit A cannot be interrupted. This operation is completed at time t₄, and the memory arbiter 15 now switches to be governed by Clk2. However, it has to wait for the next positive edge of Clk2 (at time t₅) before it can perform any actions governed by this clock signal, and the time from t₄ to t₅ is just a wait state, which cannot be used for any access to the memory, except that the data resulting from the latest read operation are available to Unit A. Then at time t₅ bus access is granted to Unit 1, which performs the write operation in the following Clk2 clock cycle. As seen, Unit 1 then requests a read operation, and due to the higher priority of this unit access to the buses is also granted in the next Clk2 clock cycle. Since Unit 1 should also be given the opportunity to read the data requested from the memory, a further Clk2 clock cycle is needed before this operation is completed.

This is the case at time t₆, and the memory arbiter 15 can now switch back to be governed by Clk1. However, it now has to wait for the next positive edge of Clk1 (at time t₇) before it can again perform any actions governed by this clock signal, and the time from t₆ to t₇ is just a wait state, which cannot be used for any access to the memory. Then at time t₇ bus access is granted to Unit A, which performs the two remaining read operations in the following Clk1 clock cycles. Thus it is seen that the memory arbiter has to assume a wait state for some time each time it must switch from one clock domain to another, and the delays resulting thereof deteriorates the effective memory access.

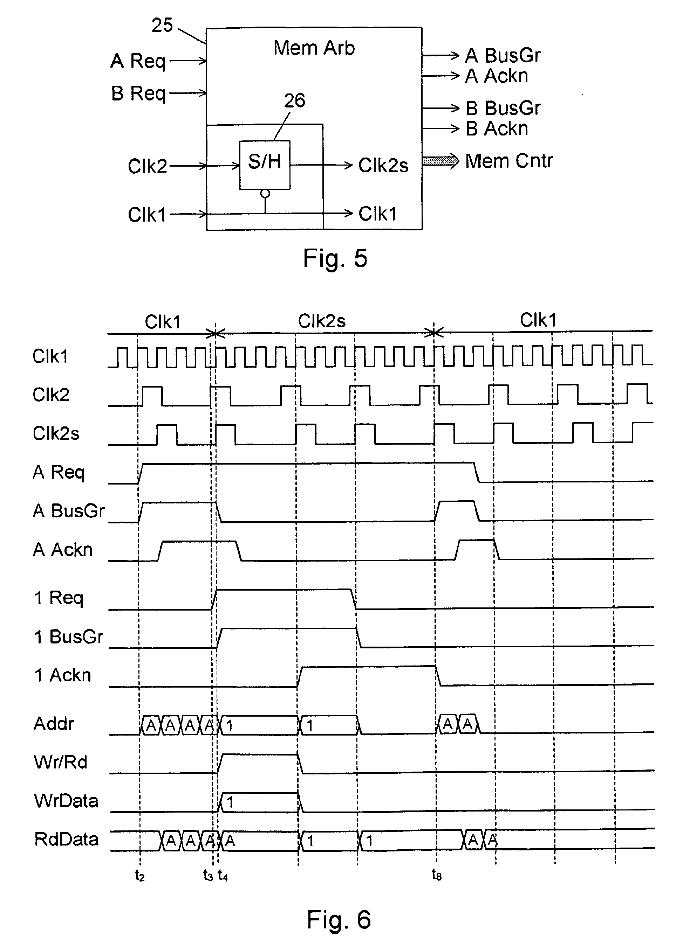

Figures 5 and 6 show how this situation can be improved according to the invention. The memory arbiter 25 shown in figure 5 is similar to the memory arbiter 15 in figure 3, except for the important fact that it includes a sample/hold circuit 26 allowing the clock signal Clk2 to be sampled by the clock signal Clk1. The result is a sampled clock signal Clk2s having its edges aligned with the edges of Clk1. As illustrated in figure 6 the sampled clock signal Clk2s may have some jitter, so that the duration of the clock cycles may vary, but this does not create any problems. Actually, jitter would also be allowed in the original clock signal Clk2. In the figure Clk2 is sampled on the positive edges of Clk1, but of course it could just as well be sampled on the negative edges. Similarly to the memory arbiter 15 of figure 3 the memory arbiter 25 is governed by Clk1 when Unit A is accessing memory, but when Unit 1 is accessing memory the memory arbiter 25 is now governed by Clk2s instead of Clk2. The important difference is that the two governing clock signals Clk1 and Clk2s are now "synchronized" to each other so that a switch from one clock domain to the other will always take place on coinciding edges of both clock signals. The memory arbiter circuit 25 can be implemented as two state machines, one running on Clk1 and one running on Clk2s.

The improved situation is illustrated in figure 6. As before, Unit A requests a number of read operations at time t₂, and again access is granted immediately, because no other units are accessing the memory at this time. The request from Unit 1 for a write operation is also again received at time t₃. The read operation already in progress is completed at time t₄ as before, and the memory arbiter 25 now switches to be governed by Clk2s. However, this switch occurs at a positive edge of Clk2s, and thus there is no need to wait for a subsequent positive clock edge before the memory arbiter can perform the actions governed by the clock signal Clk2s. Thus bus access is granted to Unit 1 at time t₄ instead of waiting until t₅ as in figure 4, and Unit 1 can perform the write operation in the Clk2s clock cycle following t₄.

The write operation and the succeeding read operation performed by Unit 1 are completed at t₈, and the memory arbiter 25 can now switch back to be governed by Clk1. Again, there is no need to wait for the next positive edge of Clk1 before the memory arbiter can perform the actions governed by this clock signal, because t₈ coincides with such an edge. Thus bus access can be granted to Unit A immediately, and the remaining read operations are performed in the following Clk1 clock cycles. The wait states that were needed in figure 4 are thus avoided, and the result is a faster access to the memory. In the example shown here, three Clk1 clock cycles are saved, which is a considerable improvement.

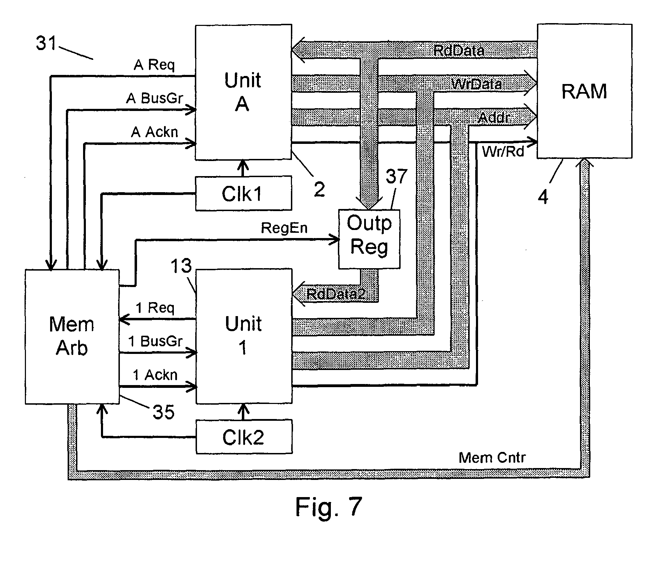

In the above examples Unit 1 needed three complete clock cycles of Clk2 or Clk2s to perform a write and a read operation, because the read data must be available to Unit 1 for a full clock cycle after the address has been clocked in. However, instead of occupying the memory 4 and the data bus (RdData) for a full Clk2 clock cycle, this can be achieved by adding registers clocked by Clk2s to the system. This is illustrated with the system 31 in figure 7. The memory arbiter 35 is similar to the memory arbiter 25 in figure 5 with the addition of an extra output line, i.e. a signal RegEn, which enables the output registers 37. Thus it is now sufficient that the data output from the memory (RdData) keeps the data for one Clk1 clock cycle. During this clock cycle the data are registered in the registers 37 by the enable signal RegEn, so that the data will be available on the data bus RdData2 for at least a full Clk2 clock cycle. The registers 37 may be clocked on either a positive or a negative edge of Clk1. Here they are shown clocked on a negative edge.

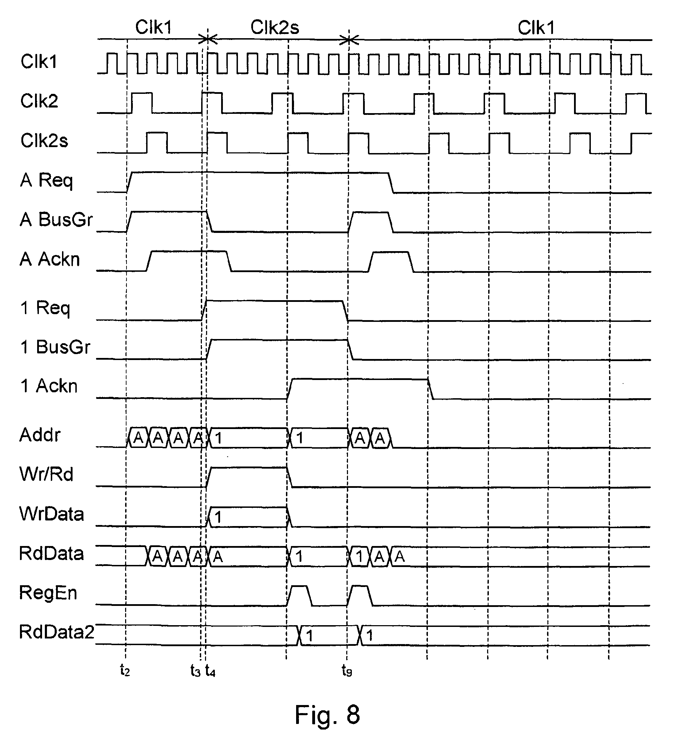

This is illustrated in figure 8. The left part of the figure is similar to figure 6, but already at time t₉ the memory arbiter 35 switches back to be governed by Clk1, which means that bus access is granted to Unit A at this time, and the remaining read operations are performed in the following Clk1 clock cycles.

Also the data resulting from the previous read operation performed by Unit 1 are only available on the RdData bus during this Clk1 clock cycle, but as described above, they are registered in the registers 37, and they will thus be available for Unit 1 for a time which is sufficient for Unit 1 to receive them. In this way a further number of Clk1 clock cycles are saved, and the result is an even faster memory access than the one described above.

When the data to the slower clock domain are registered as described above, a further improvement of the memory access is possible. During the time period where the memory arbiter 35 is governed by Clk2s, i.e. the two Clk2s clock cycles from t₄ to t₉ in figure 8, Unit 1 drives the address and write data buses for the two full Clk2s clock cycles and it is granted thereto by the bus grant signal (1 BusGr). However, this is not needed. A Clk1 clock cycle would be sufficient for the memory 4 to catch the information. As long as Unit 1 drives the buses combinatorially based on the bus grant signal, it will thus be sufficient to provide the bus grant signal (1 BusGr) for one Clk1 clock cycle, and Unit 1 will then only drive the buses for that Clk1 clock cycle. In other words the bus grant and acknowledge signals of the Clk2 domain may be clocked by the Clk1 clock signal. This means that both state machines are clocked on Clk1, while the conditions for switching from one state machine to another is still governed by Clk2s. In this way the address and data buses may be made available for units clocked by Clk1 even during the time where Unit 1 is performing a read or write operation.

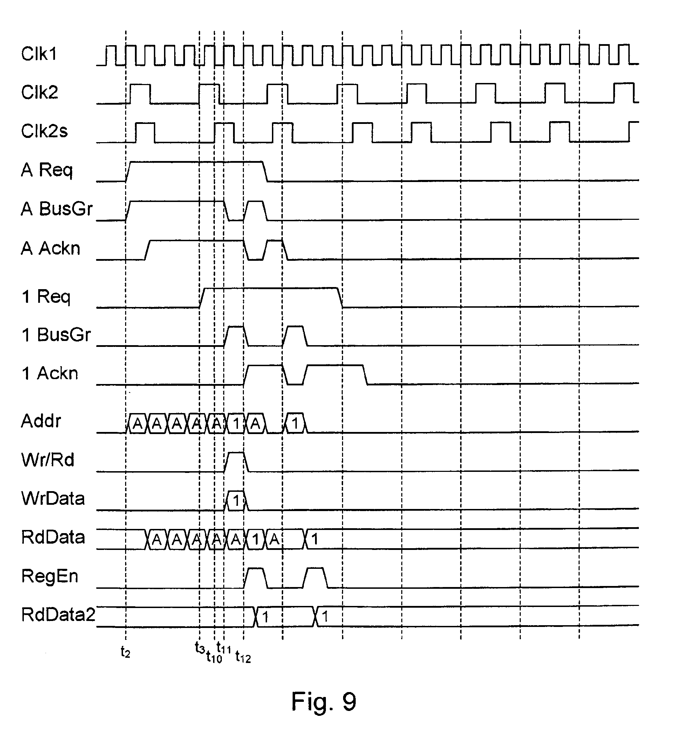

This is illustrated in figure 9. This time the Clk2 clock signal is shown sampled on the negative edges of Clk1 to illustrate that this is also possible. As before a request arrives from Unit 1 at t₃, but the switch to the Clk2 state machine at the next positive edge of Clk2s is now postponed to t₁₀ due to the sampling on the negative edges of Clk1. In the meantime, an additional read operation is performed by Unit A, and bus access is then granted to Unit 1 at time t₁₁, but this time only for one Clk1 clock cycle. Note that also the bus grant signal to Unit 1 is now clocked by Clk1, Thus at time t₁₂ bus access is again granted to Unit A while Unit 1 continues performing its write operation.

This means that Unit A no longer has to wait for Unit 1 to complete its write and read operations before the remaining read operation can be performed. It also means that the read data will actually be available to the registers 37 earlier than before, i.e. already at time t₁₂, and to ensure the correct function of the slower Unit 1 the registers 37 may therefore be clocked on the negative edge of Clk1, as can be seen in the figure.

The memory arbiter corresponding to the timing diagram of figure 9 can be implemented as two separate state machines, each of them handling one clock domain. A connection between the two state machines allows the state machine for the faster clock to know when to wait for the slower clock. A request from the faster clock domain will be served immediately, if possible, to avoid wait states, while an access from the slower clock only needs to be served before the next slower clock cycle. The sampling of the slower clock signal by the faster clock signal ensures that the arbitration will be clock skew tolerant. The slower units, i.e. those belonging to the Clk2 clock domain, will have a bus grant signal clocked on Clk1, but they will still manage a read or write operation in one Clk2 clock cycle. In this way the state machine handling the Clk2 clock domain can tell the state machine handling the Clk1 clock domain when it gives bus grant so that there will be no bus collisions, and this is achieved without introducing any extra guard clock cycles.

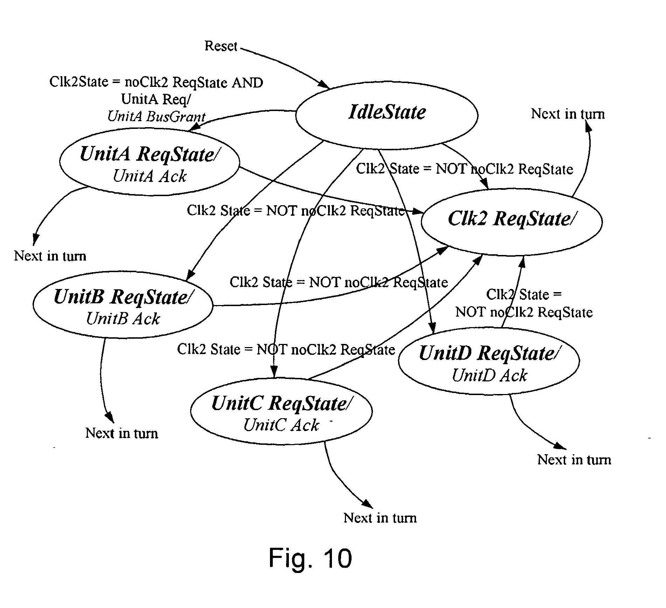

Figure 10 shows a state diagram for the state machine handling the Clk1 clock domain. It is seen that four processing units, i.e. Unit A, Unit B, Unit C and Unit D, belong to this clock domain in the example shown. For clarity reasons not all signals and conditions are shown. As an example, the condition for the transition from the IdleState to UnitA ReqState is shown, while the corresponding conditions for the other units are similar. It is also seen that the Clk2 clock domain has a higher priority so that a request from this domain will transfer control to the other state machine by a transition to the Clk2 ReqState.

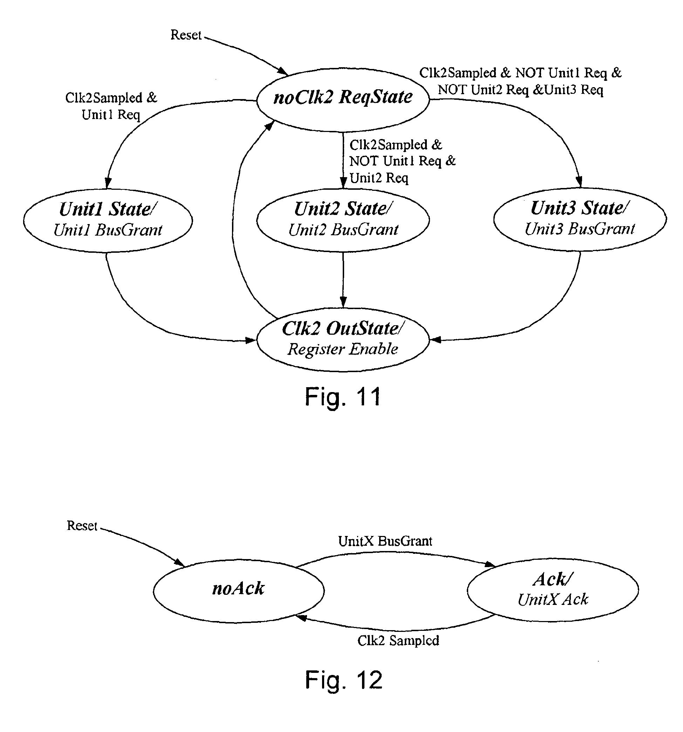

A state diagram for the state machine handling the Clk2 clock domain is shown in figure 11. Here it is seen that among the three units, i.e. Unit 1, Unit 2 and Unit 3, belonging to this domain in the example, Unit 1 has the highest priority and Unit 3 the lowest. The state where read data are made available to the requesting Clk2 unit by means of the register enable signal is also shown. The acknowledge signal to the units in the Clk2 clock domain can be clocked as shown in figure 12, which corresponds to the timing diagram of figure 9.

An advantage of the memory arbiter 35 corresponding to the timing diagram of figure 9 is, as mentioned earlier, its ability to grant requests immediately (=combinatorially) for the faster clock domain requests, while at the same time it handles the slower clock requests without any glitches on any grant signal. The acknowledge signals are clocked so that they are stable and free of glitches for both clock domains. By using this bus grant scheme the multiplexing of the address, write data and write/read signals can be performed by OR-gates. The units are supposed to drive zero on all these signals when not receiving a bus grant signal. By doing that, the OR multiplexing can be used, which saves gates compared to normal multiplexers. The multiplexing can also be distributed by performing the OR functions in multiple steps. This will minimize the routing need. Alternatively, the drive outputs of the units may be tri-stated as usual.

This design will arbitrate between all requesting units from both clock domains without any delays and with minimum throughput delay. A write from the fast clock domain will be performed in one clock cycle, and a read will be performed in two clock cycles. A request from the slower clock domain may be completed in one slow clock cycle for both read and write operations. The arbitration is fair, which means that the granted unit switches every clock cycle if more than one unit is requesting at the same time. The initial priority could be fixed since it is only the first access that some unit may get before the others. After that all the other units get their turn in e.g. a Round-Robin fashion. The initial priority could also be programmable if this would be advantageous to the design.

In the above-mentioned examples a memory arbiter handling requests from two different clock domains has been described. However, the principles described are not limited to two different clock domains. If there are more than two different clock domains the memory arbiter would work in the same way as described. The only difference is that it would be slightly more complicated in order to handle the priorities of the different clock domains.

It may also be noted that in the above-mentioned examples and timing diagrams the slower clock signal Clk2 is sampled on the negative (falling) edges of the faster clock signal Clk1. This requires that in each Clk2 clock cycle the Clk2 signal must be high as well as low for at least one full Clk1 clock cycle in order for the sampling to work correctly. Therefore, the Clk2 clock cycle needs to be at least twice as long as the Clk1 clock cycle (i.e. half the clock rate). However, it would be possible to sample the Clk2 signal at the positive (rising) as well as the negative (falling) edges of the Clk1 signal similar to the way it is done in a DDR SDRAM (Double Data Rate Synchronous Dynamic Random Access Memory), in which the outputs are activated on both the rising and falling edges of the system clock rather than just the rising edge. In this case the Clk2 signal needs to be only slightly slower than the Clk1 signal. However, in most practical situations the slower clock signal will be much slower than the faster clock signal.

Memories of the mentioned DRAM type, or other memory types including ROMs and flash memories, may of course be used instead of the clocked RAM in the examples described above. For many memory types a common data bus for reading and writing data will often be used instead of the two separate buses described above.

Although a preferred embodiment of the present invention has been described and shown, the invention is not restricted to it, but may also be embodied in other ways within the scope of the subject-matter defined in the following claims.

## Claims

1. A method of controlling access to a common memory module (4) from a number of different processing units (2, 13) clocked by at least two different clock signals, a first one of said different clock signals having a first clock rate and a second clock signal having a second clock rate which is lower than the rate of the first clock signal, wherein the number of different processing units share common address lines and data lines connected to the memory module (4), the method comprising the steps of:
• controlling the access to the common address and data lines by control signals generated by a memory control circuit (25; 35) so that only one of said processing units is allowed to drive said common address and data lines at a given time, and
• generating said control signals in dependence of the first clock signal when a processing unit (2) clocked by the first clock signal is allowed to drive said common address and data lines, and in dependence of the second clock signal when a processing unit (13) clocked by the second clock signal is allowed to drive said common address and data lines,
**characterized in that** the method further comprises the steps of:
• sampling the second clock signal by the first clock signal,
• generating from results obtained by the sampling a sampled version of the second clock signal having edges defined by edges of the first clock signal, and
• synchronizing said control signals with the sampled version of the second clock signal when a processing unit (13) clocked by the second clock signal is allowed to drive said common address and data lines.

2. A method according to claim 1, **characterized in that** the method further comprises the step of:
• providing separate data lines for data to be written to the memory module (4) by a processing unit (2, 13) and for data to be read from the memory module (4) by a processing unit (2, 13).

3. A method according to claim 1 or 2, **characterized in that** the method further comprises the step of:
• storing in a register (37) data to be read by a processing unit (13) clocked by the second clock signal for at least one clock period of the sampled version of the second clock signal.

4. A method according to any one of claims 1 to 3, **characterized in that** the method further comprises the step of:
• generating said control signals allowing a processing unit (2, 13) to drive said common address and data lines such that control signals generated in dependence of the first clock signal as well as control signals generated in dependence of the second clock signal are active for a time period equal to one clock cycle of the first clock signal.

5. A method according to any one of claims 1 to 4, **characterized in that** the method further comprises the step of:
• generating said control signals allowing a processing unit (2, 13) to drive said common address and data lines combinatorially from one of said clock signals and a request signal from said processing unit.

6. A method according to any one of claims 1 to 5, **characterized in that** the method further comprises the step of:
• generating said control signals allowing a processing unit (2, 13) to drive said common address and data lines in a number of different state machines comprising at least one state machine for each of said different clock rates.

7. A memory control circuit (25; 35) for controlling access to a common memory module (4) from a number of different processing units (2, 13) arranged to be clocked by at least two different clock signals, a first one of said different clock signals having a first clock rate and a second clock signal having a second clock rate which is lower than the rate of the first clock signal, where the number of different processing units share common address lines and data lines connected to the memory module (4), the memory control circuit (25; 35) further being arranged to:
• control the access to the common address and data lines by control signals generated by the memory control circuit so that only one of said processing units (2, 13) is allowed to drive said common address and data lines at a given time, and
• generate said control signals in dependence of the first clock signal when a processing unit (2) clocked by the first clock signal is allowed to drive said common address and data lines, and in dependence of the second clock signal when a processing unit (13) clocked by the second clock signal is allowed to drive said common address and data lines,
**characterized in that** the memory control circuit (25; 35) is further arranged to:
• sample the second clock signal by the first clock signal,
• generate from results obtained by the sampling a sampled version of the second clock signal having edges defined by edges of the first clock signal, and
• synchronize said control signals with the sampled version of the second clock signal when a processing unit (13) clocked by the second clock signal is allowed to drive said common address and data lines.

8. A memory control circuit according to claim 1, **characterized in that** the memory control circuit is further arranged to control access to a common memory module (4) having separate data lines for data to be written to the memory module by a processing unit and for data to be read from the memory module by a processing unit (2, 13).

9. A memory control circuit according to claim 7 or 8, **characterized in that** the memory control circuit further comprises a register (37) for storing data to be read by a processing unit (13) clocked by the second clock signal for at least one clock period of the sampled version of the second clock signal.

10. A memory control circuit according to any one of claims 7 to 9, **characterized in that** the memory control circuit is further arranged to generate said control signals allowing a processing unit (2, 13) to drive said common address and data lines such that control signals generated in dependence of the first clock signal as well as control signals generated in dependence of the second clock signal are active for a time period equal to one clock cycle of the first clock signal.

11. A memory control circuit according to any one of claims 7 to 10, **characterized in that** the memory control circuit is further arranged to generate said control signals allowing a processing unit (2, 13) to drive said common address and data lines combinatorially from one of said clock signals and a request signal from said processing unit (2, 13).

12. A memory control circuit according to any one of claims 7 to 11, **characterized in that** the memory control circuit comprises at least one state machine for each of said different clock rates.

## Patentansprüche

1. Verfahren zum Steuern eines Zugangs zu einem gemeinsamen Speichermodul (4) von einer Anzahl unterschiedlicher Verarbeitungseinheiten (2, 13), die durch zumindest zwei unterschiedliche Taktsignale getaktet werden, wobei ein erstes der unterschiedlichen Taktsignale eine erste Taktrate aufweist und ein zweites Taktsignal eine zweite Taktrate aufweist, die niedriger als die Rate des ersten Taktsignals ist, wobei die Anzahl unterschiedlicher Verarbeitungseinheiten gemeinsame Adressleitungen und Datenleitungen teilen, die mit dem Speichermodul (4) verbunden sind, wobei das Verfahren die Schritte umfasst:
- Steuern des Zugangs zu den gemeinsamen Adress- und Datenleitungen durch Steuersignale, die von einer Speichersteuerschaltung (25; 35) derart erzeugt werden, dass lediglich eine der Verarbeitungseinheiten die gemeinsamen Adress- und Datenleitungen zu einer gegebenen Zeit ansteuern darf, und
- Erzeugen des Steuersignals in Abhängigkeit des ersten Taktsignals, wenn eine Verarbeitungseinheit (2), die von dem ersten Taktsignal getaktet wird, die gemeinsamen Adress- und Datenleitungen ansteuern darf und in Abhängigkeit des zweiten Taktsignals, wenn eine Verarbeitungseinheit (13), die durch das zweite Taktsignal getaktet wird, die gemeinsamen Adress- und Datenleitungen ansteuern darf,
**dadurch gekennzeichnet, dass** das Verfahren weiter die Schritte umfasst:
- Abtasten des zweiten Taktsignals durch das erste Taktsignal,
- Erzeugen aus Ergebnissen, die durch das Abtasten erhalten werden, einer abgetasteten Version des zweiten Taktsignals mit Kanten, die durch Kanten des ersten Taktsignals definiert werden, und
- Synchronisieren der Steuersignale mit der abgetasteten Version des zweiten Taktsignals, wenn eine Verarbeitungseinheit (13), die durch das zweite Taktsignal getaktet wird, die gemeinsamen Adress- und Datenleitungen ansteuern darf.

2. Verfahren nach Anspruch 1, **dadurch gekennzeichnet, dass** das Verfahren weiter den Schritt umfasst:
- Bereitstellen getrennter Datenleitungen für Daten, die in das Speichermodul (4) durch eine Verarbeitungseinheit (2, 13) geschrieben werden sollen und für Daten, die aus dem Speichermodul (4) durch eine Verarbeitungseinheit (2, 13) gelesen werden sollen.

3. Verfahren nach Anspruch 1 oder 2, **dadurch gekennzeichnet, dass** das Verfahren weiter den Schritt umfasst:
- Speichern in einem Register (37) von Daten, die durch eine Verarbeitungseinheit (13) gelesen werden sollen, die durch das zweite Taktsignal für zumindest eine Taktperiode der abgetasteten Version des zweiten Taktsignals getaktet wird.

4. Verfahren nach einem der Ansprüche 1 bis 3, **dadurch gekennzeichnet, dass** das Verfahren weiter die Schritte umfasst:
- Erzeugen der Steuersignale, die es einer Verarbeitungseinheit (2, 13) erlauben, die gemeinsamen Adress- und Datenleitungen derart anzusteuern, dass Steuersignale, die in Abhängigkeit des ersten Taktsignals erzeugt werden, sowie Steuersignale, die in Abhängigkeit des zweiten Taktsignals erzeugt werden, für eine Zeitperiode gleich einem Taktzyklus des ersten Taktsignals aktiv sind.

5. Verfahren nach einem der Ansprüche 1 bis 4, **dadurch gekennzeichnet, dass** das Verfahren weiter die Schritte umfasst:
- Erzeugen der Steuersignale, die es einer Verarbeitungseinheit (2, 13) erlauben, die gemeinsamen Adress- und Datenleitungen kombinatorisch aus einem der Taktsignale und einem Anforderungssignal von der Verarbeitungseinheit anzusteuern.

6. Verfahren nach einem der Ansprüche 1 bis 5, **dadurch gekennzeichnet, dass** das Verfahren weiter den Schritt umfasst:
- Erzeugen der Steuersignale, die es einer Verarbeitungseinheit (2, 13) erlauben, die gemeinsamen Adress- und Datenleitungen in einer Anzahl unterschiedlicher Zustandsmaschinen mit zumindest einer zustandsmaschine für jede der unterschiedlichen Taktraten anzusteuern.

7. Speichersteuerschaltung (25; 35) zum Steuern eines Zugangs zu einem gemeinsamen Speichermodul (4) von einer Anzahl unterschiedlicher Verarbeitungseinheiten (2, 13), die angeordnet sind, durch zumindest zwei unterschiedliche Taktsignale getaktet zu werden, wobei ein erstes der unterschiedlichen Taktsignale eine erste Taktrate aufweist und ein zweites Taktsignal eine zweite Taktrate aufweist, die niedriger als die Rate des ersten Taktsignals ist, wobei die Anzahl von unterschiedlichen Verarbeitungseinheiten gemeinsame Adressleitungen und Datenleitungen teilt, die mit dem Speichermodul (4) verbunden sind, wobei die Speichersteuerschaltung (25; 35) weiter angeordnet ist:
- den Zugang zu den gemeinsamen Adress- und Datenleitungen durch Steuersignale zu steuern, die durch die Speichersteuerschaltung derart erzeugt werden, dass lediglich eine der Verarbeitungseinheiten (2, 13) die gemeinsamen Adress- und Datenleitungen zu einer gegebenen Zeit ansteuern darf, und
- die Steuersignale in Abhängigkeit des ersten Taktsignals zu erzeugen, wenn eine Verarbeitungseinheit (2), die durch das erste Taktsignal getaktet wird, die gemeinsamen Adress- und Datenleitungen ansteuern darf und in Abhängigkeit des zweiten Taktsignals, wenn eine Verarbeitungseinheit (13), die durch das zweite Taktsignal getaktet wird, die gemeinsamen Adress- und Datenleitungen ansteuern darf,
**dadurch gekennzeichnet, dass** die Speichersteuerschaltung (25, 35) weiter angeordnet ist:
- das zweite Taktsignal durch das erste Taktsignal abzutasten,
- aus Ergebnissen, die durch das Abtasten erhalten werden, eine abgetastete Version des zweiten Taktsignals mit Kanten zu erzeugen, die durch Kanten des ersten Taktsignals definiert werden, und
- die Steuersignale mit der abgetasteten Version des zweiten Taktsignals zu synchronisieren, wenn eine Verarbeitungseinheit (13), die durch das zweite Taktsignal getaktet wird, die gemeinsamen Adress- und Datenleitungen ansteuern darf.

8. Speichersteuerschaltung nach Anspruch 1, **dadurch gekennzeichnet, dass** die Speichersteuerschaltung weiter angeordnet ist, einen Zugang zu einem gemeinsamen Speichermodul (4) mit getrennten Datenleitungen für Daten, die in das Speichermodul durch eine Verarbeitungseinheit geschrieben werden sollen, und für Daten zu steuern, die aus dem Speichermodul durch eine Verarbeitungseinheit (2, 13) gelesen werden sollen.

9. Speichersteuerschaltung nach Anspruch 7 oder 8, **dadurch gekennzeichnet, dass** die Speichersteuerschaltung weiter ein Register (37) zum Speichern von Daten umfasst, die von einer Verarbeitungseinheit (13) gelesen werden sollen, die durch das zweite Taktsignal für zumindest eine Taktperiode der abgetasteten Version des zweiten Taktsignals getaktet wird.

10. Speichersteuerschaltung nach einem der Ansprüche 7 bis 9, **dadurch gekennzeichnet, dass** die Speichersteuerschaltung weiter angeordnet ist, die Steuersignale zu erzeugen, die es einer Verarbeitungseinheit (2, 13) erlauben, die gemeinsamen Adress- und Datenleitungen derart anzusteuern, dass Steuersignale, die in Abhängigkeit des ersten Taktsignals erzeugt werden, sowie Steuersignale, die in Abhängigkeit des zweiten Taktsignals erzeugt werden, für eine Zeitperiode gleich einem Taktzyklus des ersten Taktsignals aktiv sind.

11. Speichersteuerschaltung nach einem der Ansprüche 7 bis 10, **dadurch gekennzeichnet, dass** die Speichersteuerschaltung weiter angeordnet ist, die Steuersignale zu erzeugen, die es einer Verarbeitungseinheit (2, 13) erlauben, die gemeinsamen Adress- und Datenleitungen kombinatorisch aus einem der Taktsignale und einem Anforderungssignal von der Verarbeitungseinheit (2, 13) anzusteuern.

12. Speichersteuereinheit nach einem der Ansprüche 7 bis 11, **dadurch gekennzeichnet, dass** die Speichersteuerschaltung zumindest eine Zustandsmaschine für jede der unterschiedlichen Taktraten umfasst.

## Revendications

1. Procédé de commande de l'accès à un module de mémoire commune (4) à partir d'un certain nombre d'unités de traitement (2, 13) différentes, cadencées par au moins deux signaux d'horloge différents, un premier desdits signaux d'horloge différents ayant une première fréquence d'horloge et un second signal d'horloge ayant une seconde fréquence d'horloge, qui est inférieure à la fréquence du premier signal d'horloge, dans lequel le nombre de différentes unités de traitement partage des lignes d'adresse et des lignes de données communes connectées au module de mémoire (4), le procédé comprenant les étapes consistant à :
- commander l'accès aux lignes d'adresse et de données communes par des signaux de commande produits par un circuit de commande de la mémoire (25 ; 35), si bien qu'une seule desdites unités de traitement est autorisée à attaquer à un instant considéré lesdites lignes d'adresse et de données communes ; et
- produire lesdits signaux de commande en fonction du premier signal d'horloge lorsqu'une unité de traitement (2) cadencée par le premier signal d'horloge est autorisée à attaquer lesdites lignes d'adresse et de données communes et en fonction du second signal d'horloge lorsqu'une unité de traitement 13) cadencée par le second signal d'horloge est autorisée à attaquer lesdites lignes d'adresse et de données communes ;
**caractérisé en ce que** le procédé comprend en outre les étapes consistant à :
- échantillonner le second signal d'horloge à l'aide du premier signal d'horloge ;
- à partir des résultats obtenus dans l'échantillonnage, produire une version échantillonnée du second signal d'horloge ayant des flancs qui sont définis par des flancs du premier signal d'horloge ; et
- synchroniser lesdits signaux de commande avec la version échantillonnée du second signal d'horloge lorsqu'une unité de traitement (13) cadencée par le second signal d'horloge est autorisée à attaquer lesdites lignes d'adresse et de données communes.

2. Procédé selon la revendication 1, **caractérisé en ce que** le procédé comprend en outre l'étape consistant à :
- fournir des lignes de données séparées pour les données à écrire dans le module de mémoire (4) par une unité de traitement (2, 13) et pour les données à lire dans le module de mémoire (4) par une unité de traitement (2, 13).

3. Procédé selon la revendication 1 ou 2, **caractérisé en ce que** le procédé comprend en outre l'étape consistant à :
- stocker dans un registre (37) des données à lire par une unité de traitement (13) cadencée par le second signal d'horloge pendant au moins une période d'horloge de la version échantillonnée du second signal d'horloge.

4. Procédé selon l'une quelconque des revendications 1 à 3, **caractérisé en ce que** le procédé comprend en outre l'étape consistant à :
- produire lesdits signaux de commande autorisant une unité de traitement (2, 13) à attaquer lesdites lignes d'adresse et de données communes de manière à ce que les signaux de commande produits en fonction du premier signal d'horloge ainsi que les signaux de commande produits en fonction du second signal d'horloge soient actifs pendant une période de temps égale à un cycle d'horloge du premier signal d'horloge.

5. Procédé selon l'une quelconque des revendications 1 à 4, **caractérisé en ce que** le procédé comprend en outre l'étape consistant à :
- produire lesdits signaux de commande autorisant une unité de traitement (2, 13) à attaquer lesdites lignes d'adresse et de données communes de manière combinatoire à partir d'un desdits signaux d'horloge et d'un signal de demande provenant de ladite unité de traitement.

6. Procédé selon l'une quelconque des revendications 1 à 5, **caractérisé en ce que** le procédé comprend en outre l'étape consistant à :
- produire lesdits signaux de commande autorisant une unité de traitement (2, 13) à attaquer lesdites lignes d'adresse et de données communes dans un certain nombre d'automates à états finis, comprenant au moins un automate à états finis pour chacune desdites différentes fréquences d'horloge.

7. Circuit de commande de la mémoire (25 ; 35) destiné à commander l'accès à un module de mémoire commune (4) à partir d'un certain nombre d'unités de traitement (2, 13) différentes, conçues pour être cadencées par au moins deux signaux d'horloge différents, un premier desdits signaux d'horloge ayant une première fréquence d'horloge et un second signal d'horloge ayant une seconde fréquence d'horloge, qui est inférieure à la fréquence du premier signal d'horloge, le nombre de différentes unités de traitement partageant des lignes d'adresse et des lignes de données communes connectées au module de mémoire (4), le circuit de commande de la mémoire (25 ; 35) étant en outre conçu pour :
- commander l'accès aux lignes d'adresse et de données communes par des signaux de commande produits par le circuit de commande de la mémoire, si bien qu'une seule desdites unités de traitement (2, 13) est autorisée à attaquer à un instant considéré lesdites lignes d'adresse et de données communes ; et
- produire lesdits signaux de commande en fonction du premier signal d'horloge lorsqu'une unité de traitement (2) cadencée par le premier signal d'horloge est autorisée à attaquer lesdites lignes d'adresse et de données communes et en fonction du second signal d'horloge lorsqu'une unité de traitement 13) cadencée par le second signal d'horloge est autorisée à attaquer lesdites lignes d'adresse et de données communes ;
**caractérisé en ce que** le circuit de commande de la mémoire (25 ; 35) est en outre conçu pour :
- échantillonner le second signal d'horloge à l'aide du premier signal d'horloge ;
- à partir des résultats obtenus dans l'échantillonnage, produire une version échantillonnée du second signal d'horloge ayant des flancs qui sont définis par des flancs du premier signal d'horloge ; et
- synchroniser lesdits signaux de commande avec la version échantillonnée du second signal d'horloge lorsqu'une unité de traitement (13) cadencée par le second signal d'horloge est autorisée à attaquer lesdites lignes d'adresse et de données communes.

8. Circuit de commande de la mémoire selon la revendication 1, **caractérisé en ce que** le circuit de commande de la mémoire est en outre conçu pour commander l'accès à un module de mémoire commune (4) ayant des lignes de données distinctes pour les données à écrire dans le module de mémoire par une unité de traitement et pour les données à lire dans le module de mémoire par une unité de traitement (2, 13).

9. Circuit de commande de la mémoire selon la revendication 7 ou 8, **caractérisé en ce que** le circuit de commande de la mémoire comprend en outre un registre (37) destiné à stocker des données à lire par une unité de traitement (13) cadencée par le second signal d'horloge pendant au moins une période d'horloge de la version échantillonnée du second signal d'horloge.

10. Circuit de commande de la mémoire selon l'une quelconque des revendications 7 à 9, **caractérisé en ce que** le circuit de commande de la mémoire est en outre conçu pour produire lesdits signaux de commande autorisant une unité de traitement (2, 13) à attaquer lesdites lignes d'adresse et de données communes de manière à ce que les signaux de commande produits en fonction du premier signal d'horloge ainsi que les signaux de commande produits en fonction du second signal d'horloge soient actifs pendant une période de temps égale à un cycle d'horloge du premier signal d'horloge.

11. Circuit de commande de la mémoire selon l'une quelconque des revendications 7 à 10, **caractérisé en ce que** le circuit de commande de la mémoire est en outre conçu pour produire lesdits signaux de commande autorisant une unité de traitement (2, 13) à attaquer lesdites lignes d'adresse et de données communes de manière combinatoire à partir d'un desdits signaux d'horloge et d'un signal de demande provenant de ladite unité de traitement.

12. Circuit de commande de la mémoire selon l'une quelconque des revendications 7 à 11, **caractérisé en ce que** le circuit de commande de la mémoire comprend au moins un automate à états finis pour chacune desdites différentes fréquences d'horloge.
